# EUROPEAN PATENT SPECIFICATION

(11) **EP 3 872 684 B1**
(45) Date of publication and mention of the grant of the patent: **02.08.2023**
(21) Application number: 21151785.9
(22) Date of filing: 15.01.2021
(51) Int. Cl.: G06K 7/10, G06K 17/00

(54) **TAG READER AND TAG READING SYTEM**
ETIKETTENLESER UND ETIKETTENLESESYSTEM
LECTEUR D'ÉTIQUETTES ET SYSTÈME DE LECTURE D'ÉTIQUETTES

(30) Priority: 25.02.2020 JP 2020029095
(43) Date of publication of application: 01.09.2021
(73) Proprietor: Toshiba TEC Kabushiki Kaisha, Tokyo 141-8562 (JP)
(72) Inventor: Suzuki, Shigeaki, Tokyo 141-8562 (JP)
(74) Representative: Hoffmann Eitle

(56) References cited:
- EP-A1- 3 239 890
- US-A1- 2010 141 450
- US-A1- 2013 093 569
- US-A1- 2014 139 324
- US-A1- 2015 035 651

## Description

### FIELD

Embodiments described herein relate generally to a tag reader and a tag reading system.

### BACKGROUND

There is a tag reading system for reading an RFID tag, which can also be referred to as a wireless tag. The RFID tag can be read while at an unspecified position within range of the tag reading system. There is a tag reading system that detects a change in a relative position of an RFID tag (with respect to a tag reader) by detecting a change in a strength of the signal that the tag reader receives from the RFID tag.

The tag reader reads the RFID tag by receiving a response signal from an RFID tag that has been activated by an interrogation radio wave from the tag reader. In such a reading process, some tag readers may adjust the strength of the interrogation radio wave output from the reader. However, if the strength of the signal output by the tag reader (the interrogation wave) is unknown, it can be difficult to detect a change in the relative position of the RFID tag by detecting changes in the strength of the signal received from the RFID tag (the response wave).
US 2015/035651 A1 discusses a wireless tag communication device which communicates with a wireless tag that includes a communication unit that designates a target wireless tag to read tag information stored in the wireless tag; a read-state determination unit that determines a read state of the tag information read by the communication unit; an output adjustment unit that varies a radio wave output to be transmitted to the wireless tag in response to the result of the determination by the read-state determination unit; a signal strength detection unit that detects the signal strength of a reply signal received from the wireless tag via the communication unit; and a control unit that switches the operation mode of the communication unit between a long-distance mode to communicate with the wireless tag while the output adjustment unit varies the radio wave output and a near-held mode to communicate with the wireless tag while the signal strength detection unit detects the signal strength.
US 2013/093569 A1 discusses a wireless tag communication device that detects a communication state between an antenna and a specific wireless tag to be searched, stores a transmission power value obtained if the communication state is better than a predetermined value, reduces transmission power to the wireless tag and, if the communication state is worse than the predetermined value, increases, on the basis of the stored transmission power value, the transmission power to be higher than the transmission power value and performs communication with the wireless tag, and performs resetting on the basis of the stored transmission power value if the communication state further worsens.
EP 3 239 890 A1 discusses a simple structure that determines transmission power that creates a large margin. An interrogation device includes an interrogation unit that interrogates an RF tag in a contactless manner, and a controller that controls the interrogation unit. The controller obtains a signal strength value and an interrogation success rate from a reception signal received by the interrogation unit when controlling the interrogation unit to transmit a signal with transmission power that is being changed in stages, determines changed transmission power corresponding to a signal strength value and an interrogation success rate that are not less than a threshold selectively from a signal strength value and an interrogation success rate obtained in each stage of the transmission power, and outputs information about the determined transmission power.
US 2010/141450 A1 discusses an apparatus for communicating with an RFID tag comprising: a radio communication device configured to conduct radio communication with a plurality of RFID tag circuit elements, the RFID circuit element having an IC circuit part and a tag antenna; an information obtaining portion configured to specify identification information of at least one said RFID tag circuit element to be searched and to conduct communication for search through said radio communication device so as to obtain information from said IC circuit part of said RFID tag circuit element thus specified; and a position detection portion configured to conduct communication for position detection through said radio communication device with the specific RFID tag circuit element whose information was obtained by said information obtaining portion and to detect a position of the specified RFID tag circuit element on the basis of a communication result. US 2014/139324 A1 discusses a radio tag communication apparatus that communicates with radio tags including storing units capable of storing identification information and state information of articles includes a searchcondition setting unit for reading the state information, which is a search target, a radio tag communication unit configured to perform communication with the radio tag under a set search condition using a first reading function for reading the radio tag without designating the radio tag and a second reading function for designating the radio tag, setting a transmission output, and repeatedly reading the radio tag, a comparison determination unit configured to perform comparison determination of information read by the first reading function and the search condition, and communication control unit configured to control the radio tag communication unit according to result of the comparison determination to switch the reading operation by the first reading function to the reading operation by the second reading function.

### SUMMARY OF THE INVENTION

The mentioned problems are solved by the subject-matter of the independent claims.

Further preferred embodiments are defined in the dependent claims.

Subject matter discussed throughout the following but not falling under the scope of the claims does not form part of the invention.

One of the objects of the present invention is to improve prior art techniques and overcome at least some of the prior art problems as for instance above illustrated.

According to a first aspect, it is provided a tag reader, comprising a communication interface connectable to an external device; a communication control circuit configured to output a tag interrogation signal at different output levels from an antenna and receive a tag response signal via the antenna; a processor configured to notify the external device via the communication interface of: an output level of the tag interrogation signal corresponding to a received tag response signal from a wireless tag, a tag identification of the wireless tag included in the received tag response signal, and an indication of a signal strength of the received tag response signal.

In the tag reader according to the first aspect of the invention, the communication control circuit includes a level detection circuit configured to measure and output an RSSI value of the received tag response signal, and the indication of the signal strength of the received tag response signal is the RSSI value.

Optionally, in the tag reader according to the first aspect of the invention, the processor notifies the external device of the output level, the tag identification, and the indication of the signal strength of the received tag response signal as a tag reading result transmitted via the communication interface to the external device at the same time.

Optionally, in the tag reader according to the first aspect of the invention, the processor notifies the
external device of the output level at a different time than the tag identification and the indication of the signal strength of the received tag response signal.

Optionally, in the tag reader according to the first aspect of the invention, the wireless tag is a radio frequency identification (RFID) tag.

Optionally, the tag reader according to the first aspect of the invention further comprises a grip part configured to gripped by a user; and an external device holding part connected to the grip part and configured to hold the external device.

Optionally, the tag reader according to the first aspect of the invention further comprises to hold a plurality of articles each individually tagged with a wireless tag, wherein the antenna is positioned to read wireless tags on articles held on the article display shelf.

Optionally, in the tag reader according to the first aspect of the invention, the communication interface is a wireless communication interface.

Optionally, in the tag reader according to the first aspect of the invention, the communication interface is a wired communication interface.

According to a second aspect, it is provided a wireless tag reading system, according to claim 8.

In the wireless tag reading system according to the second aspect of the invention, the communication control circuit includes a level detection circuit configured to measure and output an RSSI value of the received tag response signal, and the indication of the signal strength of the received tag response signal is the RSSI value.

Optionally, in the wireless tag reading system according to the second aspect of the invention, the first processor is configured to transmit the output level, the tag identification, and the indication of the signal strength of the received tag response signal as a tag reading result.

Optionally, in the wireless tag reading system according to the second aspect of the invention, the first processor is configured to transmit the output level at a different time than the tag identification and the indication of the signal strength of the received tag response signal.

Optionally, in the wireless tag reading system according to the second aspect of the invention, the wireless tag is a radio frequency identification (RFID) tag.

Optionally, in the wireless tag reading system according to the second aspect of the invention, the tag reader further includes: a grip part configured to gripped by a user; and an external device holding part connected to the grip part and configured to hold the external device.

Optionally, the wireless tag reading system according to the second aspect of the invention further comprises an article display shelf configured to hold a plurality of articles each individually tagged with a wireless tag, wherein the antenna is positioned to read wireless tags on articles held on the article display shelf.

### BRIEF DESCRIPTION OF THE DRAWINGS

FIG. 1 is a block diagram schematically illustrating a tag reading system including a tag reader according to an embodiment.
FIG. 2 depicts aspects of a tag reading system according to an embodiment.
FIG. 3 depicts aspects of a tag reading system according to an embodiment.
FIG. 4 depicts example reading results stored in a buffer memory a tag reader according to an embodiment for an RFID tag.
FIG. 5 is a flowchart depicting aspects of an operation example of a tag reader according to an embodiment.

### DETAILED DESCRIPTION

According to one embodiment, a tag reader comprises a communication interface connectable to an external device, a communication control circuit configured to output a tag interrogation signal at different output levels from an antenna and receive a tag response signal via the antenna, and a processor. The processor is configured to notify the external device, via the communication interface, of an output level of the tag interrogation signal corresponding to a received tag response signal from a wireless tag, a tag identification of the wireless tag included in the received tag response signal, and an indication of a signal strength of the received tag response signal.

Hereinafter, certain example embodiments will be described with reference to the drawings.

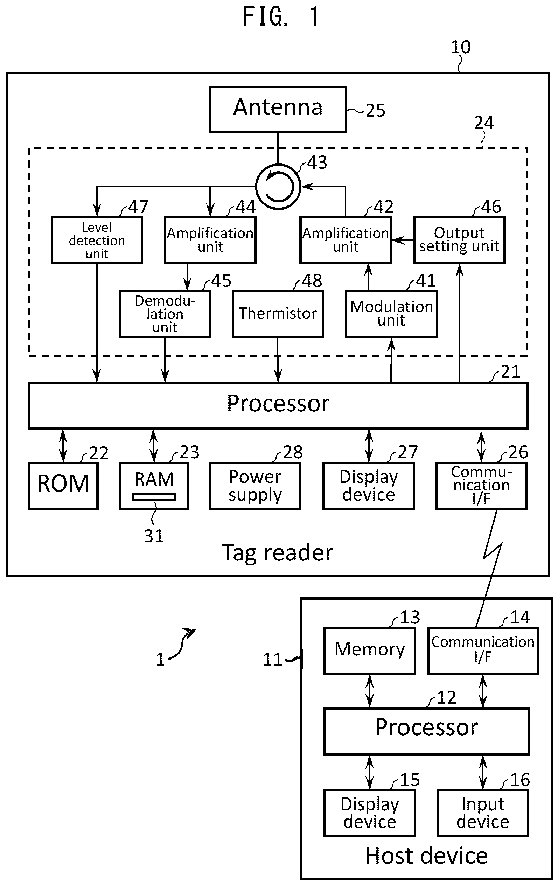

First, a configuration of a tag reader 10 and a tag reading system 1 incorporating the tag reader 10 according to an embodiment will be described. FIG. 1 is a block diagram schematically illustrating a configuration example of a tag reading system 1 including a tag reader 10 according to an embodiment. As shown in FIG. 1, the tag reading system 1 includes the tag reader 10 and a host device 11. In the tag reading system 1, the tag reader 10 reads RFID tags (wireless tags). The host device 11 detects a change in the relative position of the RFID tag with respect to the tag reader 10 based on the continuously performed readings from the tag reader 10. In general, when the position of the tag reader 10 is fixed or substantially so, the change in relative position of the RFID tag can be considered to be caused by movement of the RFID tag.

For example, the tag reading system 1 is operated as a search system for searching for an article to which an RFID tag has been attached. The tag reading system 1 may be designed to search within or cover an area such as a warehouse or a retail store. For a tag reading system 1 operating as the search system, the tag reader 10 continuously attempts to read RFID tags. The host device 11 acquires reading results for each RFID tag that has been read from the tag reader 10, and detects a change in a relative position between the tag reader and the RFID tag based on the acquired reading result. The reading result of the RFID tag also includes information indicating the strength of a reception signal received by the tag reader from the RFID tag. The host device 11 detects a change in the relative position between the tag reader and the RFID tag based on a change in the strength of the received signal in time series.

In the present embodiment, it is assumed that the tag reader 10 continuously attempts to read RFID tags attached to articles such as commodities for sale. The host device 11 detects the change of the relative position between the tag reader and a RFID tag from the reading results from the RFID tag over time. Depending on the particular tag reading system 1, the tag reader 10 may be fixed or moveable. For example, a moveable tag reader 10 may be a hand-held type device or may be mounted on a moving body. In any event, the host device 11 detects a change in relative position between the tag reader and the RFID tag based on the reading results for the RFID tag acquired by the tag reader 10.

The tag reader 10 receives a response signal from the RFID tags present within a communication range by wireless communication. The response signal from each RFID tag includes information (tag information) that has been stored in the RFID tag.

The tag reader 10 transmits a radio wave for requesting a response from the RFID tag. This radio wave (referred to as an interrogation signal) is output at a strength (output value) that can be set for each RFID tag type or the like. The tag reader 10 receives a response signal from an RFID tag in response to the interrogation signal. That is, the tag reader 10 receives a response signal including the tag information from any RFID tag activated by the interrogation signal within the communication range of the tag reader 10. When multiple RFID tags are within the communication range, the tag reader receives a different response signal (different tag information) from each of the RFID tags.

The tag reader 10 measures an RSSI value indicating a strength of a response signal received from an RFID tag. The tag reader 10 supplies the tag information included in the response signal from each RFID tag to the host device 11 together with the corresponding RSSI value for the tag as the reading result of the RFID tag. The tag reader 10 may also include, in the reading result for each RFID tag, an output value for the interrogation signal when the response signal was received.

The RFID tag can be attached to an article such as a commodity for sale, or a component being tracked in a warehouse or supply chain. The information stored in the RFID tag (the tag information) can include information for identifying the article (e.g., a tag identification number) or the like. The information stored in the RFID tag is recorded in an internal memory of the RFID tag. The RFID tag is activated by radio waves from the tag reader 10. The RFID tag outputs a response signal including the tag information recorded in its memory in response to a read command received from the tag reader 10. The RFID tag is powered by the radio waves received from the tag reader 10. Therefore, the strength of the response signal output by the RFID tag can be affected by the strength of the interrogation signal transmitted from the tag reader 10.

The host device 11 is an information processing terminal communicably connected to the tag reader 10. For example, the host device 11 is an information processing terminal such as a smartphone or a tablet PC including a display device with a touch panel as a user interface. The host device 11 may be an information processing device installed at any position as long as it has a communication interface capable of communicating with the tag reader from the position.

In the configuration example illustrated in FIG. 1, the host device 11 includes a processor 12, a memory 13, a communication interface (I/F) 14, a display device 15, an input device 16, and the like. The processor 12 performs overall control processing overall, data processing, and the like. The processor 12 is, for example, a CPU. The processor 12 executes a program stored in the memory 13 to realize various operations and functions. For example, the processor 12 detects the movement of an RFID tag (or the change in the relative position between the tag reader 10 and the RFID tag) based on the reading results of the RFID tag acquired from the tag reader 10. These processes are realized by the processor 12 executing an application program installed in the memory 13.

The communication I/F 14 is an interface for communicating with an external device. In the present embodiment, the communication I/F 14 is an interface for communicating with the tag reader 10. The communication I/F 14 may be an interface for wired communication or an interface for wireless communication. For example, the communication I/F 14 can be realized by a LAN interface, a universal serial bus (USB) interface, a Bluetooth^{®} interface, a Wi-Fi interface, or the like.

The display device 15 displays information. For example, the display device 15 displays detection results concerning the RFID tag (for example, indicates a movement of the RFID tag). The input device 16 receives operator/user inputs indicating an operation instruction or the like. The display device 15 and the input device 16 can be integrated and provided, for example, as a display device with a touch panel.

In the configuration example illustrated in FIG. 1, the tag reader 10 includes a processor 21, ROM 22, RAM 23, a communication control circuit 24, an antenna 25, a communication interface (I/F) 26, a display device 27, and a power supply 28.

The processor 21 provides overall control of the tag reader 10. The processor 21 includes, for example, an arithmetic circuit such as a CPU. The processor 21 implements control of each unit and various types of data processing by executing a program. The processor 21 may include an internal memory. The processor 21 implements various processes by executing a program stored in the ROM 22 or the internal memory. For example, the processor 21 interprets commands from the host device 11 received by the communication I/F 26 and executes a process corresponding to each received command.

The ROM 22 is a non-rewritable nonvolatile memory. The ROM 22 stores a program executed by the processor 21 and the like. The RAM 23 is a volatile memory that stores data. For example, the RAM 23 functions as a working memory or a buffer memory. The RAM 23 has a buffer memory 31 for storing the reading result of the RFID tag. The tag reader 10 may include a rewritable nonvolatile memory such as a hard disk drive (HDD) or a solid-state drive (SSD).

The communication control circuit 24 and the antenna 25 can be considered to form an RFID communication interface for reading or communicating with an RFID tag. The communication control circuit 24 causes the antenna 25 to transmit a transmission signal (radio wave) supplied from the processor 21 at a set output value. The antenna 25 outputs the transmission signal supplied from the communication control circuit 24 as a radio wave that can be received by the RFID tag.

The communication control circuit 24 also supplies a signal received by the antenna 25 to the processor 21 as reception data. That is, the antenna 25 receives a response signal from the RFID tags, and the communication control circuit 24 processes the response signal received by the antenna 25 and then supplies the response signal to the processor 21. For example, the communication control circuit 24 supplies the tag information included in a reception signal and an RSSI value indicating the strength of the reception signal to the processor 21.

The communication I/F 26 is an interface for communicating with an external device. In the tag reading system 1, the communication I/F 26 is a communication interface for communicating with the host device 11. The communication I/F 26 may be an interface for communication connection with the host device 11. The communication I/F 26 may be an interface for wired communication or an interface for wireless communication. For example, the communication I/F 26 can be realized by a LAN interface, a universal serial bus (USB) interface, a Bluetooth^{®} interface, a Wi-Fi interface, or the like.

The display device 27 displays the operation state of the tag reader 10. The display device 27 can be, for example, an LED or the like. The power supply 28 supplies power for operating the tag reader 10. The power supply 28 supplies power for operation to each unit of the tag reader 10. For example, if the tag reader is a handheld or other mobile type, the power supply 28 can be realized by a rechargeable battery. If the tag reader 10 is of a stationary type connectable to a commercial power supply, the power supply 28 can be a power supply circuit connected to the commercial power supply.

In the configuration example shown in FIG. 1, the communication control circuit 24 includes a modulation unit 41, a transmission-side amplification unit 42, a direction coupler 43, a reception-side amplification unit 44, a demodulation unit 45, an output setting unit 46, a level detection unit 47, and a thermistor 48.

The modulation unit 41 is a modulation circuit (modulator) that modulates a waveform signal (carrier wave) according to input data. The modulation unit 41 modulates a carrier wave with transmission data as supplied from the processor 21. The transmission-side amplification unit 42 is an amplification circuit (amplifier) that amplifies the input signal received from the modulation unit 41. The direction coupler 43 includes a circuit that supplies the signal output from the transmission-side amplifier 42 to the antenna 25. Thus, the communication control circuit 24 outputs from the antenna 25 a carrier wave modulated by transmission data.

The RFID tags receive the radio waves transmitted from the antenna 25. The RFID tag receives, for example, a read command included in a signal received from the antenna 25. When the RFID tag responds to the read command, the RFID tag outputs data (tag information) stored in the memory of the RFID tag, for example, by backscatter modulation.

The antenna 25 then receives radio waves output by the RFID tag(s). The direction coupler 43 includes a circuit that acquires the reception signal received by the antenna 25 and supplies the acquired reception signal to the reception-side amplification unit 44. The reception-side amplification unit 44 is an amplification circuit (amplifier) that amplifies the input signal. Here, the reception-side amplification unit 44 amplifies a reception signal received by the antenna 25. The demodulation unit 45 is a demodulation circuit (demodulator) that demodulates the data superimposed on a waveform signal (carrier wave). The demodulator 45, in effect, decodes data (tag information) included in the reception signal as amplified and output by the reception-side amplification unit 44.

The antenna 25 may both transmit and receive radio waves to and from the RFID tag. That is, the antenna 25 may transmit a signal to be supplied to the RFID tag and also receive a radio wave output from the RFID tag. In the present embodiment, the antenna 25 is positioned to transmit electromagnetic waves toward a particular reading area. The tag reader 10 is configured to communicate with the RFID tags on items or commodities disposed in this reading area of the antenna 25. The antenna 25 is, for example, a planar antenna. However, the antenna 25 is not necessarily limited to any specific configuration.

The output setting unit 46 is a circuit that sets a strength (output value) of a signal to be output from the tag reader 10. The output setting unit 46 performs control so that the strength of a signal output to the amplification unit 42 matches a set output value. In particular, the amplification unit 42 amplifies the signal supplied from the modulation unit 41 so as to have the output value (signal strength) as set by the output setting unit 46, and outputs this amplified signal to the directional coupler 43. Thus, the antenna 25 transmits an output signal (radio wave) having an output value as set by the output setting unit 46.

The level detection unit 47 is a signal level detection circuit that detects, measures, or calculates a strength of a signal received by the antenna 25. The level detection unit 47 detects the strength of a signal that is input to the reception-side amplification unit 44 from the direction coupler 43. That is, the level detection unit 47 is configured to detect an RSSI value indicating the strength of a response signal from the wireless tag as received by the antenna 25.

The thermistor 48 is a measuring instrument that measures temperature. The thermistor 48 detects, for example, a temperature in the communication control circuit 24. The thermistor 48 provides information indicative of the sensed temperature to processor 21. The processor 21 executes operation control such as communication control according to the temperature as detected by the thermistor 48.

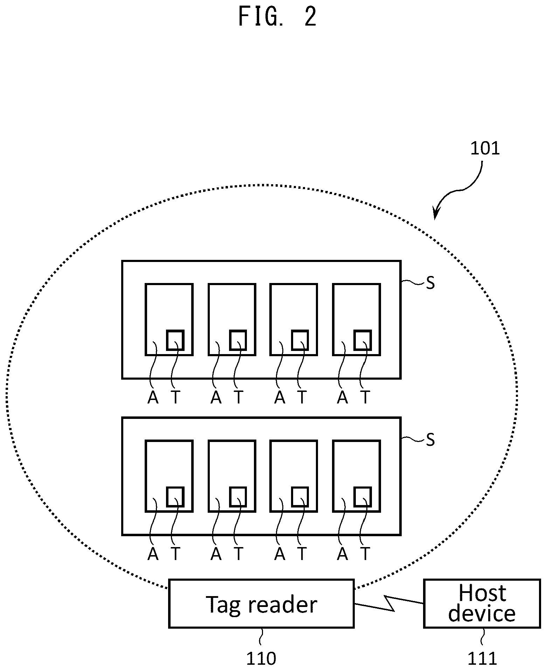

FIG. 2 is a diagram illustrating a configuration example of a smart shelf system 101 (referred to below as smart shelf 101, for simplicity). The smart shelf 101 incorporates a tag system of an embodiment. In the configuration example shown in FIG. 2, a tag reader 110 is a modification of the tag reader 10 and includes the internal configuration of tag reader 10 shown in FIG. 1. Host host device 111 is a modification of the host device 11 and includes, in general, the internal components of host device 11 shown in FIG. 1.

The smart shelf 101 is a system for reading an RFID tag T attached to articles A placed at predetermined positions S. Each predetermined position S is, for example, a shelf within range of the tag reader 110. The tag reader 110 is used for reading the RFID tags T. In the smart shelf 101, the host device 111 detects the movement of the RFID tags T (on the articles Abased on the reading result obtained by the tag reader 110 reading the RFID tags T. Since each RFID tag T is attached to an article A, detected movement of a RFID tag T corresponds to movement of an article A.

The host device 111 acquires an RSSI value indicating the strength of a signal received from the RFID tag T from the tag reader 110, and detects the movement of a RFID tag T by a change in the RSSI value. However, the strength of the signal received by the tag reader 110 from the RFID tag T also changes depending on the strength of the interrogation wave output by the tag reader 110. Therefore, the host device 111 acquires the output value for the interrogation wave from when the tag reader 110 read the RFID tag T, and thus detects movement of the RFID tag T by changes in the RSSI adjusted by the corresponding output value of the interrogation wave.

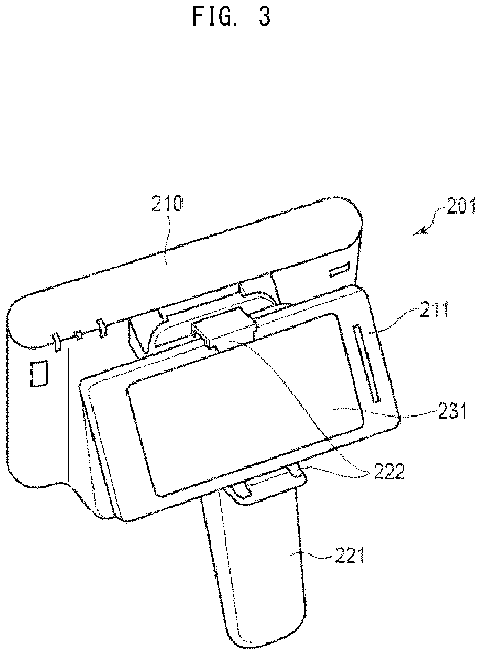

FIG. 3 is a diagram for explaining a configuration example of an RFID tag search system 201 according to an embodiment. In the configuration example shown in FIG. 2, a tag reader 210 is a modification of the tag reader 10 and includes the internal components of tag reader 10 shown in FIG. 1. Host device 211 is a modification of the host device 11 and includes, in general, the internal components of host device 11 shown in FIG. 1.

The search system 201 shown in FIG. 3 includes a handheld tag reader 210 and a host device 211 connected to the tag reader 210. The tag reader 210 shown in FIG. 3 includes the internal configuration of the tag reader 10, depicted in FIG. 1, along with external configurations for a gripping part 221 to be gripped by an operator and a holding part 222 for holding the host device 211.

In the tag reader 210, an operator holds the gripping part 221 while the host device 211 is set in (held by) the holding portion 222. The holding part 222 is, for example, one or more clips, clamps, or the like. The host device 211 includes a display device 231 with a touch panel corresponding to the display device 15 and the input device 16 of host device 11 in combination. For example, the host device 211 is implemented by a portable information terminal such as a smartphone or a tablet PC.

The search system 201 can be used to search for an RFID tag by an operator holding and moving the tag reader 210 about with the host device 211 set therein. The search system 201 reads RFID tags while the operator moves the tag reader 210 around, and then supplies the reading results to the host device 211.

The host device 211 acquires an RSSI value indicating the strength of a signal received from an RFID tag as a reading result of the RFID tag from the tag reader 210. The host device 211 detects a change in the relative position between the tag reader 210 and the RFID tag as a change in the RSSI value included in the reading result of the RFID tag. Also in this case, the strength (RSSI value) of the signal received by the tag reader 210 from the RFID tag varies with the variation of the strength (output value) of the interrogation wave output from the tag reader 210. The host device 211 thus also acquires the output value of the interrogation wave corresponding to when the tag reader 210 acquired the response signal from RFID tag. The host device 211 is thus able to detect the movement the RFID tag(s) by the change in the RSSI value adjusted based on the interrogation wave signal strength (output value). The host device 211 displays the detection results of an RFID tag on display device 231.

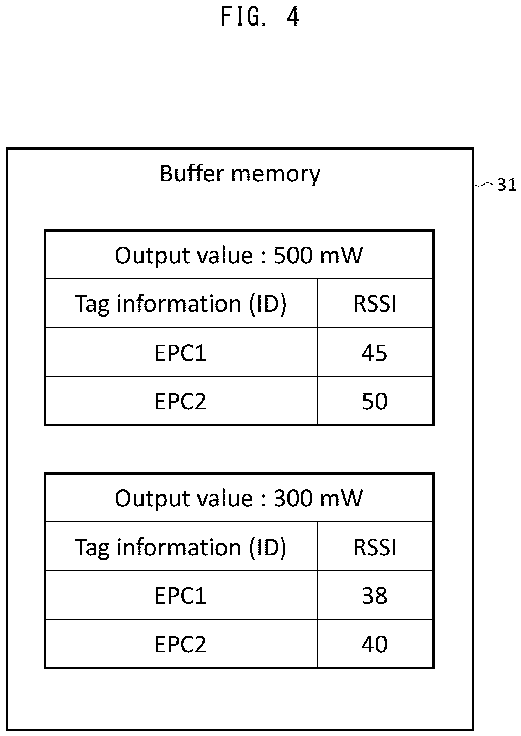

Next, a reading result from the RFID tag as stored in the buffer memory 31 by the tag reader 10 will be described. FIG. 4 is a diagram illustrating an example of reading results stored in the buffer memory 31 as read by the tag reader 10 according to an embodiment. The buffer memory 31 stores an output value (an interrogation signal strength), a tag information (ID), and an RSSI value for each RFID tag that has been detected/read.

In this context, the "output value" is a strength of a radio wave output from the antenna 25 when the RFID tag was read. The output value is set by the output setting unit 46 of the communication control circuit 24 in accordance with an instruction from the processor 21. Therefore, the output value can be known for any given reading attempt.

The tag information (ID) is information output by the RFID tags in response to a response request (read command) from the tag reader 10. The tag information can include, for example, a header, a commodity code, and a serial number. The header indicates a format of the tag information and a value range for the commodity code in the tag information. The commodity code (EPC data) is information for identifying a commodity (or other article or item). The commodity code is, for example, a stock keeping unit (SKU) code, a Japanese article number (JAN) code, or a European article number (EAN) code. The serial number is an identification number uniquely assigned to each commodity.

In the example shown in FIG. 4, the buffer memory 31 stores the tag information as read from the RFID tags and an RSSI value for each of the output values of the interrogation wave. In this case, the tag information and the RSSI value are stored in association with each other. The tag information and the RSSI value are read and stored each time the output value (interrogation wave strength) is changed. The processor 21 outputs the reading results of each of the individual RFID tags stored in the buffer memory 31 in a time series format or the like to the host device 11 in response to a request from the host device 11.

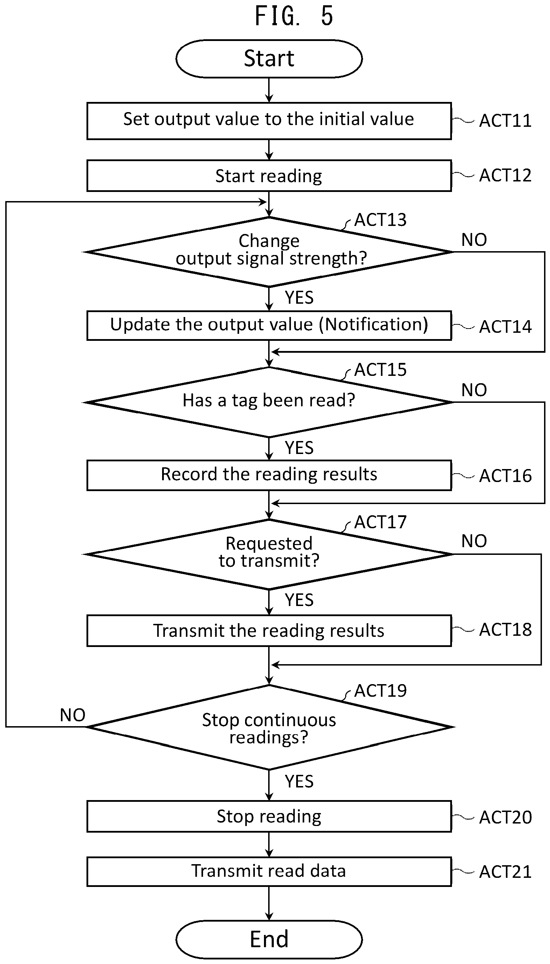

FIG. 5 is a flowchart for explaining an operation example of the tag reader 10 according to the embodiment. The processor 21 of the tag reader 10 starts reading process for an RFID tag in response to a request from the host device 11 connected through the communication I/F 26. When starting the reading of an RFID tag, the processor 21 sets the output value for the radio wave (interrogation signal) to be output from the antenna 25 by controlling the output setting unit 46 to set the output value to an initial value (ACT11).

After setting the output value to the initial value, the processor 21 starts the RFID tag reading process (ACT12). In the reading process of the RFID tag, the processor 21 controls the communication control circuit 24 to transmit an interrogation signal at the set output value from the antenna 25 at a designated reading interval. RFID tags within the communication range provide a response signal in response to the interrogation signal when received. The response signals from the RFID tags are received by the antenna 25 and by operations of the communication control circuit 24, the information from the responding RFID tags can be read by processor 21.

The processor 21 then determines whether the output signal strength of the interrogation wave is to be changed (ACT13). The processor 21 changes an output value of an output signal from the antenna 25 when some predetermined condition is satisfied. For example, the processor 21 switches the output value in accordance with a change in temperature as detected by the thermistor 48. Similarly, the processor 21 can determine to change the output value after the elapsing of a reading interval time. Likewise, the processor 21 can determine to change the output value in response to a change request received from the host device 11. For example, the processor 21 can change the output value in response to a request received from the host device 11 to increase or decrease the output value to be used in the reading operation. In addition, the processor 21 may determine to change the output value in response to an instruction from the host device 11 to change the communication range of the tag reader 10.

When the output value of the interrogation signal is changed (ACT13, YES), the processor 21 causes the output setting unit 46 to change the output value of the signal being output by the antenna 25(ACT14).

When the output value is changed, the processor 21 stores the changed output value in the buffer memory 31.

Thus, the buffer memory 31 can record the reading results of the RFID tags as read using the now changed output value.

The output value may be changed to a certain output value, or the output value may be increased or decreased in a predetermined variation range.

In the reading operation of the RFID tags, a response signal from the RFID tags is received in response to the output signal. That is, as a reading operation of an RFID tag, the processor 21 causes an output signal including a read command to be transmitted from the antenna 25 at a set output value by using the communication control circuit 24. For example, the communication control circuit 24 generates a modulation signal modulating a carrier wave with the read command using the modulation unit 41. The transmission-side amplification unit 42 amplifies the modulated signal from the modulation unit 41 to an output value as set by the output setting unit 46. The modulated signal amplified to the set output value by the transmission-side amplification unit 42 is supplied to the antenna 25 via the direction coupler 43. Thus, the antenna 25 transmits the output signal corresponding to the read command as a radio wave having the set output value.

Any RFID tag existing in the reading area to which the output signal from the antenna 25 is transmitted is activated by receiving the signal from the antenna 25 and will recognize the read command. Any RFID tag that has recognized the read command transmits a response signal including the tag information stored in its memory by backscatter modulation, for example.

The antenna 25 receives a response signal indicating the tag information from each responding RFID tag. The signal received by the antenna 25 is supplied to the reception-side amplification unit 44 via the direction coupler 43. The response signal amplified by the reception-side amplification unit 44 is input to the demodulation unit 45 and then demodulated. The signal as demodulated by the demodulator 45 is supplied to the processor 21 as tag information (e.g., a tag ID) that has bene read from the RFID tag.

The response signal received by the antenna 25 from the RFID tag input to both the reception-side amplification unit 44 and also the level detection unit 47.

The level detection unit 47 measures the strength of the received signal and supplies an RSSI value indicating the measured strength to the processor 21. The processor 21 acquires tag information (e.g., a tag ID) from the demodulation unit 45 and the RSSI value of the response signal.

Once the processor 21 acquires a reading result from the RFID tag (ACT15, YES), the processor 21 stores tag information and the corresponding RSSI value in the buffer memory 31 in association with output signal strength used for acquiring the reading result (ACT16). As a result, in the buffer memory 31, the reading result of each RFID tag for which the tag information (ID) such as an EPC value (e.g., EPC1, EPC2, ...), the RSSI value, and the output value used for reading the RFID tag are recorded for every single tag that has been read.

During the reading process, the processor 21 determines whether or not the reading result stored in the buffer memory 31 should be transmitted to the host device 11 (ACT17). For example, the processor 21 transmits the reading result of the RFID tag accumulated in the buffer memory 31 to the host device 11 in response to a transfer request from the host device 11. In some examples, the processor 21 may transmit the reading results of the RFID tags that have accumulated in the buffer memory 31 to the host device 11 at predetermined transmission intervals.

When it is not necessary to transmit the reading result stored in the buffer memory 31 (ACT17, NO), the processor 21 proceeds to the process of ACT19.

When the reading result of the RFID tag is output (ACT17, YES), the processor 21 transmits the reading result of the RFID tags stored in the buffer memory 31 to the host device 11 (ACT18). For example, the processor 21 transmits the tag information (ID), the RSSI value, and the output value to the host device 11 for every single tag reading of each RFID tag.

For example, when an RFID tag is read repeatedly over time, the processor 21 transmits the reading results in time series to the host device 11.

By reading the RFID tags at a fixed reading interval or the like, the host device 11 acquires via the communication I/F 14 a reading result of each RFID tag arranged in time series. A processor 12 of the host device 11 is configured to detect the movement of an RFID tag or a change in the relative position of the RFID tag with respect to the tag reader based on the reading results acquired from the tag reader 10.

The processor 12 arranges the reading results acquired from the tag reader 10 for each separate tag information (ID), and collates time-series reading results for each RFID tag. The processor 12 detects a movement, a change in position, or the like of a specific RFID tag based on a change between an output value and an RSSI value in the reading results for the RFID tag. Movement or the like of the RFID tag can be detected as a change between an output value and an RSSI value for a reading result of a specific RFID tag. For example, if there is no change in the output value but the RSSI value changes for a specific RFID tag, the processor 21 can detect that the RFID tag has moved.

During the reading operation of the RFID tag, the processor 21 determines to stop reading in response to a reading stop request (ACT19). For example, the processor 21 receives a request to stop reading an RFID tag from the host device 11 at an arbitrary timing. The processor 21 determines to stop reading when receiving the reading stop request from the host device 11. When it is not determined to stop reading (ACT19, NO), the processor 21 returns to ACT13 and repeatedly executes the above-described process.

When it is determined to stop reading (ACT19, NO), the processor 21 stops the transmission of the output signal from the antenna 25 and stops the reading operation of the RFID tag (ACT20). When the reading operation of the RFID tag is stopped, the processor 21 transmits the reading result of the RFID tag stored in the buffer memory 31 to the host device 11 (ACT21), and ends the reading process.

In the above-described operation example, the tag reader 10 transmits tag information, the RSSI value, and the output value as the to the host device, but possible examples are not limited this. The tag reading system 1 may be any system as long as the host device 11 can recognize that the tag reader 10 has changed the output value used for tag reading. For example, the tag reader 10 may separately notify the host device 11 that the output value has been change whenever the output value is switched, and tag information and the RSSI value may be transmitted to the host device 11 as the reading result without specifically including the output value in the reading result for each tag reading.

As described above, the tag reading system 1 includes the tag reader 10 and the host device 11 and both these components process the information read from the RFID tag by the tag reader 10. The tag reader 10 has a function of notifying the host device 11 of an output value of the interrogation wave output from an antenna. The tag reader 10 detects an RSSI value of a response signal from the RFID tags as received by the antenna in response to an interrogation wave. The tag reader 10 transmits tag information included in a response signal from the RFID tags and an RSSI value for the response signal to the host device 11 as a reading result of the RFID tags. The host device 11 performs the processing associated with detection of the movement of the RFID tags based the reading results from the tag reader 10.

Thus, in the tag reading system 1, the host device 11 can determine whether the change in the RSSI value in the response signal from the RFID tag has been caused by a change in the interrogation wave signal strength (output value) or by the movement of the RFID tag. As a result, the tag reading system can prevent erroneous detection of movements of RFIDs tag that might be caused by noticing a change in the RSSI value that has been caused by a change in the output signal from the tag reader 10 rather than RFID tag movement.

In the above-described embodiment, a program executed by a processor can be stored in advance in the memory in the device. However, a program executed by a processor may also or instead be downloaded to the device from a network or may be installed in the device from a storage medium. The storage medium may be any storage medium such as a CD-ROM that can store a program and can be read by the device. The functions obtained by the installation or download of a software program may be realized in cooperation with an OS (operating system) or the like in the apparatus.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims.

## Claims

1. A tag reader (10), comprising:
a communication interface (26) connectable to an external device (11);
a communication control circuit (24) configured to output a tag interrogation signal at different output levels from an antenna (25) and receive a tag response signal via the antenna (25);
a processor (21) configured to notify the external device (11) via the communication interface (26) of:
an output level of the tag interrogation signal corresponding to a received tag response signal from a wireless tag,
a tag identification of the wireless tag included in the received tag response signal, and
an indication of a signal strength of the received tag response signal, **characterized in that**
the communication control circuit (24) includes a level detection circuit (47) configured to measure and output an RSSI value of the received tag response signal, and
the indication of the signal strength of the received tag response signal is the RSSI value.

2. The tag reader (10) according to claim 1, wherein the processor (21) is configured to notify the external device (11) of the output level, the tag identification, and the indication of the signal strength of the received tag response signal as a tag reading result transmitted via the communication interface (26) to the external device (11) at the same time.

3. The tag reader (10) according to any of claims 1 to 2, wherein the processor (21) is configured to notify the external device (11) of the output level at a different time than the tag identification and the indication of the signal strength of the received tag response signal.

4. The tag reader (10) according to any of claims 1 to 3, wherein the wireless tag is a radio frequency identification, RFID, tag.

5. The tag reader (10) according to any of claims 1 to 4, further comprising:
a grip part (221) configured to gripped by a user; and
an external device holding part (222) connected to the grip part and configured to hold the external device (211) .

6. The tag reader (10) according to any of claims 1 to 5, further comprising:
an article display shelf configured to hold a plurality of articles each individually tagged with a wireless tag, wherein
the antenna is positioned to read wireless tags on articles held on the article display shelf.

7. The tag reader according to any of claims 1 to 6, wherein the communication interface (26) is a wireless communication interface or a wired communication interface.

8. A wireless tag reading system, comprising:
the tag reader (10) of claim 1;
an external device (11) including:
a second processor (12) configured to receive the output level,
the tag identification, and
the indication of the signal strength
from the tag reader via the first communication interface (26) and detect a movement of the wireless tag based on the received output level, tag identification, and indication of the signal strength, wherein
the communication control circuit (24) includes a level detection circuit (47) configured to measure and output an RSSI value of the received tag response signal, and
the indication of the signal strength of the received tag response signal is the RSSI value.

9. The wireless tag reading system according to claim 8, wherein the first processor (21) is configured to transmit the output level, the tag identification, and the indication of the signal strength of the received tag response signal as a tag reading result.

10. The wireless tag reading system according to any of claims 8 to 9, wherein the first processor (21) is configured to transmit the output level at a different time than the tag identification and the indication of the signal strength of the received tag response signal.

11. The wireless tag reading system according to any of claims 8 to 10, wherein tag reader (10) further includes:
a grip part (221) configured to gripped by a user; and
an external device holding part (222) connected to the grip part and configured to hold the external device (211) .

12. The wireless tag reading system according to any of claims 8 to 11, further comprising:
an article display shelf configured to hold a plurality of articles each individually tagged with a wireless tag, wherein
the antenna is positioned to read wireless tags on articles held on the article display shelf.

## Patentansprüche

1. Tag-Lesegerät (10), umfassend:
eine Kommunikationsschnittstelle (26), die mit einer externen Vorrichtung (11) verbunden werden kann;
eine Kommunikationssteuerschaltung (24), die so konfiguriert ist, dass sie ein Tag-Abfragesignal mit unterschiedlichen Ausgangspegeln von einer Antenne (25) ausgibt und ein Tag-Antwortsignal über die Antenne (25) empfängt;
einen Prozessor (21), der so konfiguriert ist, dass er der externen Vorrichtung (11) über die Kommunikationsschnittstelle (26) Folgendes mitteilt:
einen Ausgangspegel des Tag-Abfragesignals entsprechend einem empfangenen Tag-Antwortsignal von einem drahtlosen Tag,
eine Tag-Identifikation des drahtlosen Tags, die in dem empfangenen Tag-Antwortsignal eingeschlossen ist, und
einer Angabe einer Signalstärke des empfangenen Tag-Antwortsignals, **dadurch gekennzeichnet, dass**
die Kommunikationssteuerschaltung (24) eine Pegelerfassungsschaltung (47) einschließt, die konfiguriert ist, um einen RSSI-Wert des empfangenen Tag-Antwortsignals zu messen und auszugeben, und
die Angabe der Signalstärke des empfangenen Tag-Antwortsignals der RSSI-Wert ist.

2. Tag-Lesegerät (10) nach Anspruch 1, wobei der Prozessor (21) so konfiguriert ist, dass er der externen Vorrichtung (11) den Ausgangspegel, die Tag-Identifikation und die Angabe der Signalstärke des empfangenen Tag-Antwortsignals als Tag-Leseergebnis mitteilt, das gleichzeitig über die Kommunikationsschnittstelle (26) an die externe Vorrichtung (11) übertragen wird.

3. Tag-Lesegerät (10) nach einem der Ansprüche 1 bis 2, wobei der Prozessor (21) so konfiguriert ist, dass er der externen Vorrichtung (11) den Ausgangspegel zu einem anderen Zeitpunkt mitteilt als die Tag-Identifikation und die Angabe der Signalstärke des empfangenen Tag-Antwortsignals.

4. Tag-Lesegerät (10) nach einem der Ansprüche 1 bis 3, wobei der drahtlose Tag ein Funkfrequenz-Identifikations- (RFID) -Tag ist.

5. Tag-Lesegerät (10) nach einem der Ansprüche 1 bis 4, weiter umfassend:
ein Griffteil (221), das konfiguriert ist, um von einem Benutzer gegriffen zu werden; und
ein Halteteil (222) für eine externe Vorrichtung, das mit dem Griffteil verbunden ist und so konfiguriert ist, dass es die externe Vorrichtung (211) hält.

6. Tag-Lesegerät (10) nach einem der Ansprüche 1 bis 5, weiter umfassend:
ein Artikelanzeigefach, das konfiguriert ist, um eine Vielzahl von Artikeln zu halten, die jeweils einzeln mit einem drahtlosen Tag getaggt sind, wobei
die Antenne so positioniert ist, dass sie drahtlose Tags an Artikeln liest, die auf dem Artikelanzeigefach gehalten werden.

7. Tag-Lesegerät nach einem der Ansprüche 1 bis 6, wobei die Kommunikationsschnittstelle (26) eine drahtlose Kommunikationsschnittstelle oder eine drahtgebundene Kommunikationsschnittstelle ist.

8. Drahtloses Tag-Lesesystem, umfassend:
das Tag-Lesegerät (10) nach Anspruch 1;
eine externe Vorrichtung (11), die Folgendes einschließt:
einen zweiten Prozessor (12), der konfiguriert ist, dass er den Ausgangspegel,
die Tag-Identifikation, und
die Angabe der Signalstärke
von dem Tag-Lesegerät über die erste Kommunikationsschnittstelle (26) empfängt und eine Bewegung des drahtlosen Tags auf der Grundlage des/der empfangenen Ausgangspegels, Tag-Identifikation und Angabe der Signalstärke erfasst, wobei
die Kommunikationssteuerschaltung (24) eine Pegelerfassungsschaltung (47) einschließt, die konfiguriert ist, um einen RSSI-Wert des empfangenen Tag-Antwortsignals zu messen und auszugeben, und
die Angabe der Signalstärke des empfangenen Tag-Antwortsignals der RSSI-Wert ist.

9. Drahtloses Tag-Lesesystem nach Anspruch 8, wobei der erste Prozessor (21) so konfiguriert ist, dass er den Ausgangspegel, die Tag-Identifikation und die Angabe der Signalstärke des empfangenen Tag-Antwortsignals als ein Tag-Leseergebnis überträgt.

10. Drahtloses Tag-Lesesystem nach einem der Ansprüche 8 bis 9, wobei der erste Prozessor (21) so konfiguriert ist, dass er den Ausgangspegel zu einem anderen Zeitpunkt überträgt als die Tag-Identifikation und die Angabe der Signalstärke des empfangenen Tag-Antwortsignals.

11. Drahtloses Tag-Lesesystem nach einem der Ansprüche 8 bis 10, wobei das Tag-Lesegerät (10) weiter einschließt:
ein Griffteil (221), das konfiguriert ist, um von einem Benutzer gegriffen zu werden; und
ein Halteteil (222) für eine externe Vorrichtung, das mit dem Griffteil verbunden ist und so konfiguriert ist, dass es die externe Vorrichtung (211) hält.

12. Drahtloses Tag-Lesesystem nach einem der Ansprüche 8 bis 11, weiter umfassend:
ein Artikelanzeigefach, das konfiguriert ist, um eine Vielzahl von Artikeln zu halten, die jeweils einzeln mit einem drahtlosen Tag getaggt sind, wobei
die Antenne so positioniert ist, dass sie drahtlose Tags an Artikeln liest, die auf dem Artikelanzeigefach gehalten werden.

## Revendications

1. Lecteur (10) d'étiquettes, comprenant :
une interface (26) de communication apte à être connectée à un dispositif externe (11) ;
un circuit (24) de commande de communication configuré pour délivrer en sortie un signal d'interrogation d'étiquette à différents niveaux de sortie à partir d'une antenne (25) et pour recevoir un signal de réponse d'étiquette via l'antenne (25) ;
un processeur (21) configuré pour notifier au dispositif externe (11) via l'interface (26) de communication, ce qui suit :
un niveau de sortie du signal d'interrogation d'étiquette correspondant à un signal de réponse d'étiquette reçu à partir d'une étiquette sans fil,
une identification d'étiquette de l'étiquette sans fil incluse dans le signal de réponse d'étiquette reçu, et
une indication d'une force de signal du signal de réponse d'étiquette reçu, **caractérisé en ce que**
le circuit (24) de commande de communication inclut un circuit (47) de détection de niveau configuré pour mesurer et délivrer en sortie une valeur RSSI du signal de réponse d'étiquette reçu, et
l'indication de la force de signal du signal de réponse d'étiquette reçu est la valeur RSSI.

2. Lecteur (10) d'étiquettes selon la revendication 1, dans lequel le processeur (21) est configuré pour notifier au dispositif externe (11) le niveau de sortie, l'identification d'étiquette et l'indication de la force de signal du signal de réponse d'étiquette reçu en tant que résultat de lecture d'étiquette transmis via l'interface (26) de communication au dispositif externe (11) en même temps.

3. Lecteur (10) d'étiquettes selon l'une quelconque des revendications 1 à 2, dans lequel le processeur (21) est configuré pour notifier au dispositif externe (11) le niveau de sortie à un moment différent de l'identification d'étiquette et de l'indication de la force de signal du signal de réponse d'étiquette reçu.

4. Lecteur (10) d'étiquettes selon l'une quelconque des revendications 1 à 3, dans lequel l'étiquette sans fil est une étiquette d'identification par radiofréquence, RFID.

5. Lecteur (10) d'étiquettes selon l'une quelconque des revendications 1 à 4, comprenant en outre :
une partie poignée (221) configurée pour être saisie par un utilisateur ; et
une partie de maintien (222) de dispositif externe reliée à la partie poignée et configurée pour maintenir le dispositif externe (211).

6. Lecteur (10) d'étiquettes selon l'une quelconque des revendications 1 à 5, comprenant en outre :
une étagère d'affichage d'articles configurée pour contenir une pluralité d'articles étiquetés chacun individuellement par une étiquette sans fil, dans lequel
l'antenne est positionnée de façon à lire des étiquettes sans fil sur des articles contenus sur l'étagère de présentation d'articles.

7. Lecteur d'étiquettes selon l'une quelconque des revendications 1 à 6, dans lequel l'interface (26) de communication est une interface de communication sans fil ou une interface de communication câblée.

8. Système de lecture d'étiquettes sans fil, comprenant :
le lecteur (10) d'étiquettes selon la revendication 1 ;
un dispositif externe (11) incluant :
un second processeur (12) configuré pour recevoir le niveau de sortie,
l'identification d'étiquette, et
l'indication de la force de signal
en provenance du lecteur d'étiquettes via la première interface (26) de communication et détecter un déplacement de l'étiquette sans fil sur la base du niveau de sortie, de l'identification d'étiquette et de l'indication de la force de signal reçus, dans lequel
le circuit (24) de commande de communication inclut un circuit (47) de détection de niveau configuré pour mesurer et délivrer en sortie une valeur RSSI du signal de réponse d'étiquette reçu, et
l'indication de la force de signal du signal de réponse d'étiquette reçu est la valeur RSSI.

9. Système de lecture d'étiquettes sans fil selon la revendication 8, dans lequel le premier processeur (21) est configuré pour transmettre le niveau de sortie, l'identification d'étiquette et l'indication de la force de signal du signal de réponse d'étiquette reçu en tant que résultat de lecture d'étiquette.

10. Système de lecture d'étiquettes sans fil selon l'une quelconque des revendications 8 à 9, dans lequel le premier processeur (21) est configuré pour transmettre le niveau de sortie à un moment différent de l'identification d'étiquette et de l'indication de la force de signal du signal de réponse d'étiquette reçu.

11. Système de lecture d'étiquettes sans fil selon l'une quelconque des revendications 8 à 10, dans lequel le lecteur (10) d'étiquettes inclut en outre :
une partie poignée (221) configurée pour être saisie par un utilisateur ; et
une partie de maintien (222) de dispositif externe reliée à la partie poignée et configurée pour maintenir le dispositif externe (211).

12. Système de lecture d'étiquettes sans fil selon l'une quelconque des revendications 8 à 11, comprenant en outre :
une étagère d'affichage d'articles configurée pour contenir une pluralité d'articles étiquetés chacun individuellement par une étiquette sans fil, dans lequel
l'antenne est positionnée de façon à lire des étiquettes sans fil sur des articles contenus sur l'étagère de présentation d'articles.
